# EUROPEAN PATENT APPLICATION

(11) **EP 2 113 680 A2**
(43) Date of publication of application: **04.11.2009**
(21) Application number: 09158463.1
(22) Date of filing: 22.04.2009
(51) Int. Cl.: F16F 13/30

(54) **Apparatus including an MR-Fluid Hydraulic Mount**

(30) Priority: 01.05.2008 US 150938
(71) Applicant: Delphi Technologies, Inc., Troy, Michigan 48007 (US); Dr. Ing. h.c. F. Porsche Aktiengesellschaft, 71287 Weissach (DE)
(72) Inventor: Bodie, Mark O., Dayton, OH 45410 (US); Barta, David J., Beavercreek, OH 45434 (US); Long, Mark W., Bellbrook, OH 45305 (US); Brobeil, Thorsten, 71287 Weissach (DE); Ujhasi, Marco, 71287 Weissach (DE); Koch, Thorsten, 71287 Weissach (DE)
(74) Representative: Denton, Michael John

(57) **Abstract**

A first expression of an embodiment of the invention is for apparatus including a magnetorheological-fluid (MR-fluid) hydraulic mount (12). The mount includes an internal MR-fluid cavity (14) and a partition plate assembly (16). The partition plate assembly partitions the cavity into first and second MR-fluid chambers (18,20). The mount is adapted to receive an MR-fluid pressure sensor (22) in fluid communication with the second MR-fluid chamber. A second expression of an embodiment of the invention is for apparatus including an MR-fluid hydraulic mount. The mount includes an internal MR-fluid cavity, a partition plate assembly, and an MR-fluid pressure sensor. The partition plate assembly partitions the cavity into first and second MR-fluid chambers. The MR-fluid pressure sensor is in fluid communication with the second MR-fluid chamber.

## Description

### TECHNICAL FIELD

The present invention relates generally to hydraulic mounts, and more particularly to apparatus including an MR-fluid (magnetorheological-fluid) hydraulic mount.

### BACKGROUND OF THE INVENTION

Conventional magnetorheological-fluid (MR-fluid) hydraulic mounts include those which are attachable to first and second motor-vehicle components (such as an automobile engine or transmission and an automobile body/frame) and which have a pumping chamber and a reservoir chamber. The pumping and reservoir chambers are separated by a partition plate having a through hole. These mounts also have an electric coil which magnetically influences the through hole. Magnetorheological fluid is placed in the pumping and reservoir chambers and in the through hole.

Examples of MR-fluid hydraulic-mounts are found in U.S. Patent Serial No. 6,622,995 and in US Patent Application Publication No. 2005/0230890. An example of a hydraulic mount having an integral controller is found in US Patent Application Publication No. 2005/0029720.

What is needed is an improved MR-fluid hydraulic mount.

### SUMMARY OF THE INVENTION

A first expression of an embodiment of the invention is for apparatus including an MR-fluid hydraulic mount. The mount includes an internal MR-fluid cavity and a partition plate assembly. The partition plate assembly partitions the cavity into first and second MR-fluid chambers. The mount is adapted to receive an MR-fluid pressure sensor in fluid communication with the second MR-fluid chamber.

A second expression of an embodiment of the invention is for apparatus including an MR-fluid hydraulic mount. The mount includes an internal MR-fluid cavity, a partition plate assembly, and an MR-fluid pressure sensor. The partition plate assembly partitions the cavity into first and second MR-fluid chambers. The MR-fluid pressure sensor is in fluid communication with the second MR-fluid chamber.

Several benefits and advantages are derived from one or more of the expressions of an embodiment of the invention. In one example, the MR-fluid hydraulic mount is installed in a vehicle and is controlled by using at least a fluid pressure within the second MR-fluid chamber obtained by using the MR-fluid pressure sensor. This avoids problems of controlling the mount using a position or velocity sensor to determine compression and rebound of the mount, such problems including noise, reliability of the position/velocity sensor arm attachment, packaging of the position/velocity sensor, and assembly cost of the position/velocity sensor.

### SUMMARY OF THE DRAWINGS

Figure 1 is a longitudinal cross-sectional schematic view of an embodiment of an MR-fluid (magnetorheological-fluid) hydraulic mount of the invention;

Figure 2 is a diagram showing the mount of figure 1 attached to a vehicle body and a vehicle engine;

Figure 3 is a flow chart of a first method for controlling an MR-fluid hydraulic mount, such as the mount of figures 1-2; and

Figure 4 is a diagram of a low-pass filter which can be used to filter a delta pressure in performing the first method of figure 3.

### DESCRIPTION OF THE PREFERRED EMBODIMENT

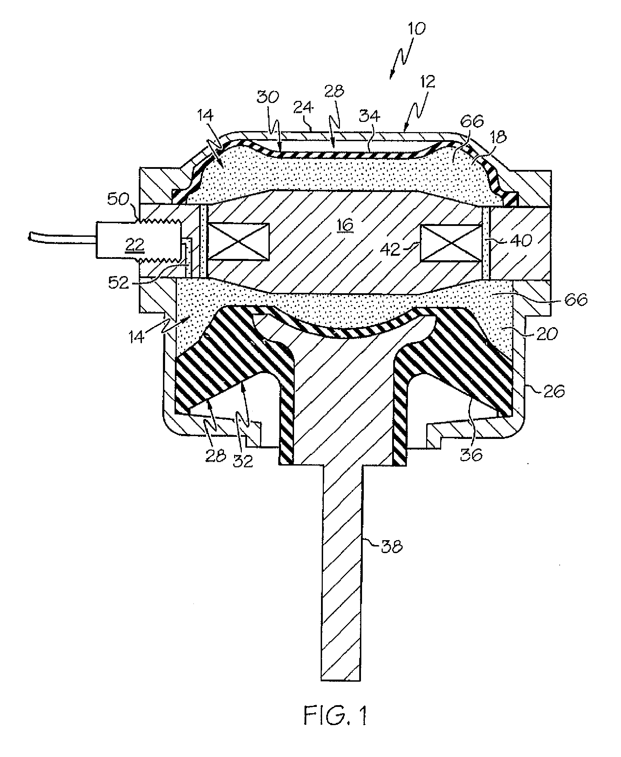

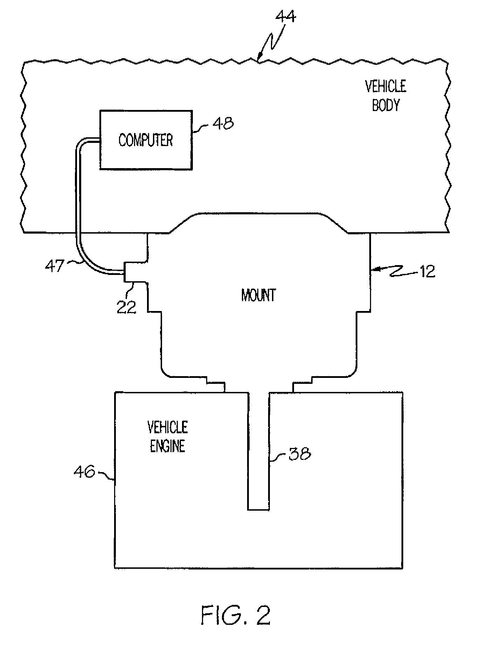

Referring now to the drawing, figures 1-2 show an embodiment of the present invention. A first expression of the embodiment of figure 1-2 is for apparatus 10 including an MR-fluid (magnetorheological-fluid) hydraulic mount 12. The mount 12 includes an internal MR-fluid cavity 14 and a partition plate assembly 16. The partition plate assembly 16 partitions the cavity 14 into first and second MR-fluid chambers 18 and 20. The mount 12 is adapted to receive an MR-fluid pressure sensor 22 in fluid communication with the second MR-fluid chamber 20.

In one enablement of the first expression of the embodiment of figures 1-2, the mount 12 includes a base plate 24 and a housing 26, wherein the partition plate assembly 16 is disposed between and fixedly attached to the base plate 24 and the housing 26. In one variation, the mount 12 includes an MR-fluid-sealing assembly 28 including a first portion 30 and a second portion 32, wherein the first portion 30 partially defines the first MR-fluid chamber 18 and wherein the second portion 32 partially defines the second MR-fluid chamber 20.

In one modification, the first portion 30 includes a flexible diaphragm 34 which is disposed between the base plate 24 and the partition plate assembly 16. In the same or a different modification, the second portion 32 includes a flexible molded assembly 36 which is less flexible than the diaphragm 34 and which is attached to the housing 26. In one illustration, the mount 12 includes a mounting stud assembly 38 which is attached to the molded assembly 36.

In one construction, the partition plate assembly 16 includes an orifice 40 extending from the first MR-fluid chamber 18 to the second MR-fluid chamber 20, and the mount 12 includes an electric coil 42 disposed to magnetically influence the orifice 40. In one application, the base plate 24 is adapted to be attached to a vehicle body 44, the mounting stud assembly 38 is adapted to be attached to a vehicle engine 46 (providing an engine hanging mount), and the MR-fluid pressure sensor 22 is operatively connectable (such as by a cable 47) to a vehicle computer 48 adapted to determine a command electric current to be applied to the electric coil 42. In one example, the partition plate assembly 16 includes a port 50 adapted to receive the MR-fluid pressure sensor 22. In one arrangement, the partition plate assembly 16 includes a passageway 52 extending from the port 50 to the second MR-fluid chamber 20. In another example, the housing 26 includes a port (not shown) adapted to receive the MR-fluid pressure sensor 22. Other examples are left to the artisan.

It is noted that the partition plate assembly 16 may be thick or thin and may be monolithic or made of a plurality of parts. In one configuration of the first expression of the embodiment of figures 1-2, the orifice 40 is disposed radially outward of the electric coil 42, and the partition plate assembly 16 is devoid of any decoupler and is devoid of any non-MR-fluid orifice. In one employment of the first expression of the embodiment of figures 1-2, the first MR-fluid chamber 18 is a reservoir chamber and the second MR-fluid chamber 20 is a pumping chamber.

A second expression of the embodiment of figures 1-2 is for apparatus 10 including an MR-fluid hydraulic mount 12. The mount 12 includes an internal MR-fluid cavity 14, a partition plate assembly 16, and an MR-fluid pressure sensor 22. The partition plate assembly 16 partitions the cavity into first and second MR-fluid chambers 18 and 20. The MR-fluid pressure sensor 22 is in fluid communication with the second MR-fluid chamber 20.

It is noted that the enablements, variations, etc. of the first expression of the embodiment of figures 1-2 are equally applicable to the second expression of the embodiment of figures 1-2. In one example of the second expression of the embodiment of figures 1-2, the MR-fluid pressure sensor 22 is attached to the partition plate assembly 16. In one arrangement, the partition plate assembly 16 includes a passageway 52 extending from the MR-fluid pressure sensor 22 to the second MR-fluid chamber 20.

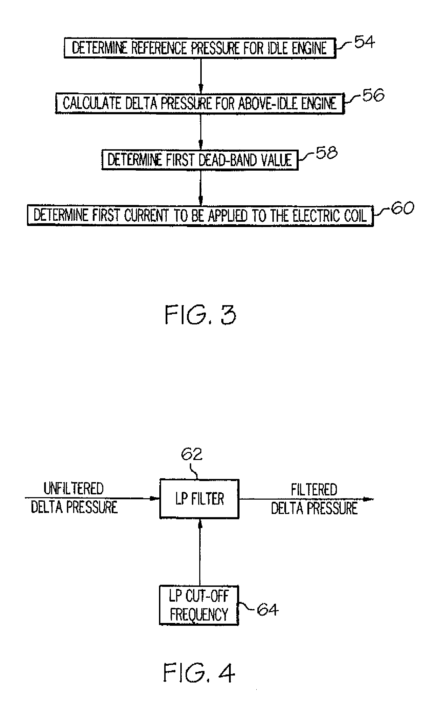

A first method of the invention is for controlling an MR-fluid hydraulic mount 12 connected to a vehicle engine 46. The mount 12 includes an internal MR-fluid cavity 14 and includes a partition plate assembly 16 partitioning the cavity 14 into first and second MR-fluid chambers 18 and 20. The partition plate assembly 16 has an orifice 40 extending from the first MR-fluid chamber 18 to the second MR-fluid chamber 20, and the mount 12 includes an electric coil 42 disposed to magnetically influence the orifice 40. The first method includes steps a) through d). Step a) is labeled as "Determine Reference Pressure For Idle Engine" in block 54 of figure 3. Step a) includes, when the vehicle engine 46 is at idle, determining a reference pressure as a fluid pressure within the second MR-fluid chamber 20. Step b) is labeled as "Calculate Delta Pressure For Above-Idle Engine" in block 56 of figure 3. Step b) includes, when the vehicle engine 46 is above idle, calculating a delta pressure as a difference between a previous fluid pressure and a current fluid pressure within the second MR-fluid chamber 20. Step c) is labeled as "Determine First Dead-Band Value" in block 58 of figure 3. Step c) includes determining a first dead-band value using at least a difference between the reference pressure and the current fluid pressure. Step d) is labeled as "Determine First Current To Be Applied To The Electric Coil" in block 60 of figure 3. Step d) includes, when the delta pressure is greater than the first dead-band value, determining a first command electric current to be applied to the electric coil 42 using at least the difference between the reference pressure and the current fluid pressure and applying the first command electric current to the electric coil 42.

It is noted that pressures and/or pressure differences may be filtered or unfiltered pressures and/or pressure differences. In one variation of the first method, step a) is performed every time the vehicle engine 46 is at idle. In another variation, step a) is performed one time during an engine cycle (engine turn on to engine turn off) the first time the vehicle engine 46 is at idle.

In one application, the first method also includes determining a second dead-band value using at least the difference between the reference pressure and the current fluid pressure. In this application, step d) sets the first command electric current to zero when the difference between the reference pressure and the current fluid pressure is not greater than the second dead-band value.

In an extension of the first method, there also is included step e). In one variation, step e) includes, when the delta pressure is not greater than the first dead-band value, setting the first command electric current to zero. In a different variation, step e) includes, when the delta pressure is not greater than the first dead-band value, determining a second command electric current to be applied to the electric coil 42 using at least the difference between the reference pressure and the current pressure and applying the second command electric current to the electric coil 42.

In one employment of the first method, as seen in figure 4, there is also included the step of using a digital low-pass (LP) filter 62 to filter the delta pressure. In one embodiment, the low-pass filter 62 has a low-pass (LP) cut-off frequency 64 which is set higher for higher-frequency vehicle events and which is set lower for lower-frequency vehicle events. Examples of vehicle events include a rough road (detectable, for example, by using wheel-mounted accelerometers) and a wheel spin (detectable, for example, by using wheel speed sensors). In one variation, step c) includes determining the first dead-band value using at least the difference between the reference pressure and the current pressure for a particular vehicle event. In one modification, step c) includes determining the first dead-band value using at least the difference between the reference pressure and the current pressure for the particular vehicle event and for a particular vehicle speed. An example of a vehicle-speed-dependent vehicle event is a rough road.

In one implementation of the first method and an application thereof, the first and second dead-band values are experimentally determined (and stored in lookup tables) for desirable driver/passenger comfort and desirable vehicle performance for each vehicle model for different values of delta pressure. In the same implementation of the first method and a variation of an extension thereof, the first and second command electric currents are also experimentally determined (and stored in lookup tables) for desirable driver/passenger comfort and desirable vehicle performance for each vehicle model for different values of the difference between the reference pressure and the current fluid pressure. It is noted that a positive delta pressure indicates the mount 12 is undergoing compression and that a negative delta pressure indicates the mount 12 is undergoing rebound.

In one utilization of the first method, a time interval of substantially one millisecond exists between the previous fluid pressure and the current fluid pressure. In the same or a different utilization, the first and second MR-fluid chambers 18 and 20 and the orifice 40 (and the passageway 52) contain MR fluid 66.

A second method of the invention is for controlling an MR-fluid hydraulic mount 12 connected to a vehicle engine 46. The mount 12 includes an internal MR-fluid cavity 14 and a partition plate assembly 16 partitioning the cavity 14 into first and second MR-fluid chambers 18 and 20. The mount 12 includes an MR-fluid pressure sensor 22 in fluid communication with the second MR-fluid chamber 20. The partition plate assembly 16 has an orifice 40 extending from the first MR-fluid chamber 18 to the second MR-fluid chamber 20. The mount 12 includes an electric coil 42 disposed to magnetically influence the orifice 40. The second method includes steps a) through d). Step a) includes, when the vehicle engine 46 is at idle, determining a reference pressure as a fluid pressure within the second MR-fluid chamber 20 using the MR-fluid pressure sensor 22. Step b) includes; when the vehicle engine 46 is above idle, calculating a delta pressure as a difference between a previous fluid pressure and a current fluid pressure within the second MR-fluid chamber 20, wherein the previous and current fluid pressures are obtained using the MR-fluid pressure sensor 22. Step c) includes determining a first dead-band value using at least a difference between the reference pressure and the current fluid pressure. Step d) includes, when the delta pressure is greater than the first dead-band value, determining a first command electric current to be applied to the electric coil 42 using at least the difference between the reference pressure and the current fluid pressure and applying the first command electric current to the electric coil 42.

It is noted that the applications, extensions, etc. of the first method are equally applicable to the second method.

A third method of the invention, which is broader than the first and second methods, is for controlling an MR-fluid hydraulic mount 12 connected to a vehicle engine 46. The mount 12 includes an internal MR-fluid cavity 14 and includes a partition plate assembly 16 partitioning the cavity 14 into first and second MR-fluid chambers 18 and 20. The partition plate assembly 16 has an orifice 40 extending from the first MR-fluid chamber 18 to the second MR-fluid chamber 20. The mount 12 includes an electric coil 42 disposed to magnetically influence the orifice 40 The third method includes steps a) through c). Step a) includes, when the vehicle engine 46 is at idle, determining a reference pressure as a fluid pressure within the second MR-fluid chamber 20. Step b) includes, when the vehicle engine 46 is above idle, determining a command electric current to be applied to the electric coil 42 using at least a difference between the reference pressure and a current fluid pressure within the second MR-fluid chamber 20. Step c) includes applying the command electric output current to the electric coil.

In one implementation of the third method, the mount 12 includes an MR-fluid pressure sensor 22 in fluid communication with the second MR-fluid chamber 20, and the reference, previous and current fluid pressures are obtained using the MR-fluid pressure sensor 22.

Several benefits and advantages are derived from one or more of the expressions of an embodiment of the invention. In one example, the MR-fluid hydraulic mount is installed in a vehicle and is controlled by using at least a fluid pressure within the second MR-fluid chamber obtained by using the MR-fluid pressure sensor. This avoids problems of controlling the mount using a position or velocity sensor to determine compression and rebound of the mount, such problems including noise, reliability of the position/velocity sensor arm attachment, packaging of the position/velocity sensor, and assembly cost of the position/velocity sensor.

The foregoing description of several expressions of an embodiment and methods of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. Apparatus comprising an MR-fluid hydraulic mount including an internal MR-fluid cavity and a partition plate assembly partitioning the cavity into first and second MR-fluid chambers, wherein the mount is adapted to receive an MR-fluid pressure sensor in fluid communication with the second MR-fluid chamber.

2. The apparatus of claim 1, wherein the mount includes a base plate and a housing, wherein the partition plate assembly is disposed between and fixedly attached to the base plate and the housing.

3. The apparatus of claim 2, wherein the mount includes an MR-fluid-sealing assembly including a first portion and a second portion, wherein the first portion partially defines the first MR-fluid chamber, and wherein the second portion partially defines the second MR-fluid chamber.

4. The apparatus of claim 3, wherein the first portion includes a flexible diaphragm which is disposed between the base plate and the partition plate assembly.

5. The apparatus of claim 4, wherein the second portion includes a flexible molded assembly which is less flexible than the first portion and which is attached to the housing.

6. The apparatus of claim 5, wherein the mount includes a mounting stud assembly which is attached to the molded assembly.

7. The apparatus of claim 6, wherein the partition plate assembly includes an orifice extending from the first MR-fluid chamber to the second MR-fluid chamber, and wherein the mount includes an electric coil disposed to magnetically influence the orifice.

8. The apparatus of claim 7, wherein the base plate is adapted to be attached to a vehicle body, wherein the mounting stud assembly is adapted to be attached to a vehicle engine, and wherein the MR-fluid pressure sensor is operatively connectable to a vehicle computer adapted to determine a command electric current to be applied to the electric coil.

9. The apparatus of claim 8, wherein the partition plate assembly includes a port adapted to receive the MR-fluid pressure sensor.

10. The apparatus of claim 9, wherein the partition plate assembly includes a passageway extending from the port to the second MR-fluid chamber.

11. The apparatus of any one of claims 1 to 8, further comprising an MR-fluid pressure sensor, wherein the MR-fluid pressure sensor is in fluid communication with the second MR-fluid chamber.

12. The apparatus of claim 11, wherein the MR-fluid pressure sensor is attached to the partition plate assembly.

13. The apparatus of claim 12, wherein the partition plate assembly includes a passageway extending from the MR-fluid pressure sensor to the second MR-fluid chamber.
